Europäisches Patentamt

European Patent Office

Office européen des brevets

(11) Veröffentlichungsnummer: **0 201 070 B1**

# EUROPÄISCHE PATENTSCHRIFT

(45) Veröffentlichungstag der Patentschrift: **10.07.91**

(21) Anmeldenummer: **86106107.5**

(22) Anmeldetag: **04.05.86**

Die Akte enthält technische Angaben, die nach dem Eingang der Anmeldung eingereicht wurden und die nicht in dieser Patentschrift enthalten sind.

(51) Int. Cl.⁵: **C01B 3/22**, C01B 3/32, B01J 23/40, B01J 23/56, B01J 37/00

(54) **Katalysator zur Herstellung von Synthesegas bzw. von Wasserstoff und Verfahren zu dessen Herstellung.**

(30) Priorität: **08.05.85 DE 3516580**

(43) Veröffentlichungstag der Anmeldung:
**12.11.86 Patentblatt 86/46**

(45) Bekanntmachung des Hinweises auf die Patenterteilung:
**10.07.91 Patentblatt 91/28**

(84) Benannte Vertragsstaaten:
**BE DE FR GB NL**

(56) Entgegenhaltungen:
**EP-A- 0 144 506**
**DE-A- 2 229 210**
**US-A- 3 943 050**
**US-A- 4 499 205**

(73) Patentinhaber: **SÜD-CHEMIE AG**
**Lenbachplatz 6**
**W-8000 München 2(DE)**

(72) Erfinder: **Schneider, Michael, Dr.**
**Waldparkstrasse 54a**
**W-8012 Ottobrunn-Riemerling(DE)**
Erfinder: **Kochloefl, Karl, Dr.**
**Kreuzstrasse 2**
**W-8052 Moosburg(DE)**
Erfinder: **Bock, Ortwin**
**Im Wiesental 12**
**W-8300 Landshut-Kumhausen(DE)**

(74) Vertreter: **Reitzner, Bruno, Dr. et al**
**Patentanwälte Dipl.-Ing. R. Splanemann Dr.**
**B. Reitzner Tal 13**
**W-8000 München 2(DE)**

**Beschreibung**

In den letzten Jahren wurde der Methanolspaltung eine wachsende Aufmerksamkeit gewidmet. Das Synthesegas, zusammengesetzt aus etwa 33 Vol.-% CO und 66 Vol.-% $H_2$, kann gemäß der Gleichung (1) gewonnen werden.

$$CH_3OH \rightleftharpoons CO + 2H_2 \quad (1)$$

Die Reaktion (1) ist stark endotherm und kann bei Temperaturen über 200°C unter atmosphärischem oder erniedrigte Methanoldruck mit Hilfe gewisser heterogener Katalysatoren durchgeführt werden.

Bei der Erhöhung des Methanolumsatzes (über 30°C) kann es zur Verkokung des Katalysators gemäß den Gleichungen (2) und (3) kommen.

$$2 CH_3OH \rightarrow C + CO_2 + 4H_2 \quad (2)$$
$$CH_3OH \rightarrow C + H_2 + H_2O \quad (3)$$

Eine weitere technische interessante Reaktion ist die Methanoldampfreformierung, die gemäß Gleichung (4) verläuft und zu einem Gasgemisch aus 25 Vol.-% $CO_2$ und 75 Vol.-% $H_2$ führt.

$$CH_3OH + H_2O \rightleftharpoons CO_2 + 3H_2 \quad (4)$$

Diese endotherme Reaktion kann auch als eine Kombination der Methanolspaltung (1) und der CO-Konvertierung gemäß Gleichung (5) angesehen werden.

$$CO + H_2O \rightleftharpoons CO_2 + H_2 \quad (5)$$

Die Methanolreformierung fand bisher ein größeres Interesse als die Methanolspaltung.

Aus der EP-A-0144506, ie unter Artikel 54 (3) EPÜ fällt sind Katalysatoren zur Herstellung von Synthesegas bzw. von Wasserstoff aus wasserhaltigem Methanol durch Spaltung bzw. Wasserdampfreformierung bekannt, die gleich gut unter den Bedingungen der Methanolspaltung (Gleichung 1) und der Methanoldampfreformierung (Gleichung 4) einsetzbar sind, so daß der Prozeß auf einfache Weise durch Variieren des Wasserdampfgehalts des eingesetzten Methanols entweder in Richtung Synthesegaserzeugung oder in Richtung Wasserstofferzeugung gelenkt werden kann, ohne daß der Katalysator ausgewechselt werden muß. Diese Katalysatoren haben unter wechselnden Verfahrensbedingungen eine gute Stabilität und rufen auch ohne Wasserdampfzusatz bzw. bei niedrigen Wasserdampfgehalten, d.h. unter den Bedingungen der Methanolspaltung gemäß Gleichung (1), keine Koksbildungen hervor.

Diese Katalysatoren enthalten

A) eine Edelmetallkomponente aus einem oder mehreren Elementen der 8. Nebengruppe des Periodensystems auf

B) einem oxidischen Träger auf der Basis

$B_1$) von $TiO_2$ und/oder $CeO_2$, gegebenenfalls im Gemisch mit anderen feuerfesten Metalloxiden und/oder einem hydraulischen Binder oder

$B_2$) von $TiO_2$ und/oder $CeO_2$, die als Zwischenschicht auf die Oberfläche eines vorgeformten feuerfesten Trägers aufgebracht sind,

Es wurde nun gefunden, daß diese Katalysatoren hinsichtlich ihrer Aktivität verbessert werden können, wenn bestimmte feuerfeste Metalloxide zugesetzt werden.

Gegenstand der Erfindung ist somit ein Katalysator der vorstehend angegebenen Gattung, der dadurch gekennzeichnet ist, daß der oxidische Träger ($B_1$) bzw. die Zwischenschicht ($B_2$) als andere feuerfeste Metalloxide $ZrO_2$ und/oder $La_2O_3$ in Konzentrationen von 1 bis 10 Gew.-%, insbesondere von 5 bis 10 Gew.-%, enthält.

Der erfindungsgemäße Katalysator ermöglicht es, den Prozeß entweder unter den Bedingungen der Methanolspaltung (Synthesegaserzeugung) oder unter den Bedingungen der Methanoldampfreformierung (Erzeugung von Wasserstoff) zu führen, wobei lediglich der Anteil des zugesetzten Wasserdampfes variiert wird. Der erfindungsgemäße Katalysator ist bei unterschiedlichen Verfahrensbedingungen stabil und neigt unter den Bedingungen der Methanolspaltung nicht zur Koksbildung.

Ferner kann der erfindungsgemäße Katalysator auch in Gegenwart von Sauerstoff eingesetzt werden, also unter Bedingungen, bei denen die bekannten Kupferkatalysatoren nicht stabil sind. Da die Reaktionen (1) und (4) endotherm sind, ist es in vielen Fällen erwünscht, die Reaktionen in Gegenwart von Sauerstoff durchzuführen, damit ein autothermer Reaktionsverlauf erzielt wird.

Für die technische Anwendung der erfindungsgemäßen Katalysatoren ist es vorteilhaft, daß der oxidische Träger ($B_1$) bzw. der vorgeformte feuerfeste Träger ($B_2$) in Form von Tabletten, Kugeln, Ringen, Strangpreßlingen oder Waben vorliegt.

Bei der Edelmetallkomponente (A) handelt es sich vorzugsweise um Platin und/oder Rhodium und/oder Iridium und/oder Palladium, wobei auch Legierungen dieser Metalle vorliegen können.

Die Konzentration der Edelmetallkomponente (A) kann verhältnismäßig niedrig gehalten werden. Vorzugsweise beträgt diese etwa 0,01 bis 3 Gew.-%, insbesondere 0,05 bis 0,3 Gew.-%, bezogen auf den Gesamtkatalysator.

Die Begriffe "feuerfeste Metalloxide" und "vorgeformte feuerfeste Träger" sind im weitesten Sinn zu verstehen und umfassen auch Mischoxide.

Diese Substanzen sind im allgemeinen bei Temperaturen bis zu 1000 °C stabil. Vorzugsweise ist (Variante $B_1$) das feuerfeste Metalloxid $\alpha$-$Al_2O_3$ oder $Cr_2O_3$ und (Variante $B_2$) der vorgeformte feuerfeste Träger Cordierit, Mullit, Siliciumcarbid oder $\alpha$-$Al_2O_3$.

Der hydraulische Binder ist vorzugsweise Portland- oder Calciumaluminatzement, wobei die Konzentration des Binders 5 bis 50 Gew.-%, vorzugsweise 15 bis 25 Gew.-%, bezogen auf den gesamten Katalysator, beträgt.

Gegenstand der Erfindung ist ferner ein Verfahren zur Herstellung des Katalysators.

Nach der Variante ($B_1$) werden aus $TiO_2$ und/oder $CeO_2$ im Gemisch mit $ZrO_2$ und/oder $La_2O_3$ durch Verpressen Formkörper hergestellt; diese werden dann calciniert und mit der Edelmetallkomponente imprägniert. Vorzugsweise setzt man dem $TiO_2$ und/oder $CeO_2$ dem hydraulischen Binder zu. Anschließend wird dem Gemisch Wasser zugesetzt, um den hydraulischen Binder zu aktivieren, worauf durch Verpressen Formkörper hergestellt werden. Diese werden getrocknet, gegebenenfalls mit Dampf gehärtet, calciniert und mit der Edelmetallkomponente imprägniert.

Um das Verpressen zu erleichtern, setzt man der zu verpressenden Masse Gleitmittel, wie Aluminiumstearat und/oder Graphit, zu.

Aus der US-A-4499205 ist ein Katalysator zur Reformierung vom Methanol zu Wasserstoff und Kohlenmonoxid bekannt, der ein oder mehrere Oxide der seltenen Erden und der Elemente der Titangruppe auf einem Träger aus aktivem Aluminiumoxid enthält.

Nach der Variante $B_2$ bringt man das $TiO_2$ und/oder $CeO_2$ und das $ZrO_2$ und/oder $La_2O_3$ auf die Oberfläche eines vorgeformten feuerfesten Materials (z.B. $\alpha$-$Al_2O_3$ oder Keramik) auf; der so behandelte Formkörper wird dann calciniert und mit der Edelmetallkomponente imprägniert. Unter vorgeformter Keramik versteht man beispielsweise die handelsüblichen Keramik-Wabenkörper, die sich durch eine hohe Festigkeit auszeichnen. Das Keramikmaterial besteht beispielsweise aus Cordierit oder Mullit. Als vorgeformte Formkörper können aber auch Tabletten, Kugeln oder Ringe verwendet werden.

Um die Haftfestigkeit des Titandioxids an den vorgeformten Formkörpern zu verbessern, werden die Formkörper vorzugsweise mit Alkoxytitanaten, wie Tetraisopropyltitanat ($(CH_3)_2CHO)_4Ti$) oder Tetra-n-butyltitanat($(n-C_4H_8O)_4Ti$) imprägniert. Die Alkoxytitanate werden dann üblicherweise mit Dampf hydrolysiert, worauf sich eine Calcinierung anschließt.

Nach beiden Verfahrensvarianten wird die Imprägnierung des Trägermaterials mit der Metallkomponente unter Verwendung von wasserlöslichen Edelmetallsalzen, insbesondere von $H_2PtCl_6$ oder $(NH_4)_2PtCl_6$ oder den entsprechenden Rh-, Pd-, oder Ir -Salzen durchgeführt. Die so hergestellten Katalysatorvorläufer werden dann getrocknet und calciniert. Die Calcinierung des imprägnierten Trägermaterials wird gewöhnlich bei 450 bis 650 °C, insbesondere bei 550 bis 600 °C, durchgeführt.

Um aus den Edelmetallsalzen die entsprechenden Edelmetalle zu erhalten, werden die calcinierten Katalysatorvorläufer mit Wasserstoff aktiviert, wobei die Aktivierung sofort nach der Calcinierung oder erst im Reaktor vor dem Einsatz erfolgen kann.

Gegenstand der Erfindung ist ferner die Anwendung der vorstehend genannten Katalysatoren zur Herstellung von Synthesegas bzw. von Wasserstoff aus wasserhaltigem Methanol, durch Spaltung bzw. Wasserdampfreformierung in Abhängigkeit vom Wasserdampfgehalt des Methanols.

Wie aus den Gleichungen (1) und (4) ersichtlich ist, verläuft die Spaltung des Methanols in Abwesenheit von Wasserdampf, während die Wasserdampfreformierung gemäß Gleichung (4) in Anwesenheit von Wasserdampf erfolgt. In Abhängigkeit vom Wasserdampfgehalt des Methanols kann der Prozeß auf einfache Weise so gesteuert werden, daß entweder die eine oder die andere Reaktion überwiegt. Soll reiner Wasserstoff gemäß Gleichung (4) oder ein Synthesegas mit einem Wasserstoffüberschuß erzeugt werden, so wird das gemäß Gleichung (4) gebildete Kohlendioxid in an sich bekannter Weise aus dem Gasgemisch entfernt.

Im allgemeinen wird die Umsetzung des wasserhaltigen Methanols im Temperaturbereich von etwa 300 bis etwa 600°C und bei einem Druck von 0,1 bis 10 bar durchgeführt, wobei üblicherweise eine Raumgeschwindigkeit von 0,5 bis 20 Liter wasserhaltiges Methanol je Stunde und Liter Katalysator angewendet wird. Vorzugsweise wird die Umsetzung im Temperaturbereich von 400 bis 500°C bei Drucken von etwa 0,1 bis 1 bar, insbesondere von 0,75 bis 1 bar, ausgehend von Methanol mit einem Wassergehalt von 0,5 bis 25 Vol.-%, insbesondere von 2 bis 10 Vol.-%, bei einer Raumgeschwindigkeit von 2 bis 8 Liter/h · Liter Katalysator, bezogen auf das wasserhaltige Methanol, durchgeführt.

Die Umsetzung des wasserhaltigen Methanols kann in Gegenwart von Sauerstoff unter autothermen Bedingungen durchgeführt werden

Die in den nachstehenden Beispielen angegebenen Versuche wurden in einem konventionellen Metallrohrreaktor (Durchflußsystem) mit tablettiertem (4 x 4 mm) Katalysator (50 ml) oder mit Wabenkeramikkörpern (Durchmesser 17 mm, Länge 150 mm) bei Atmosphärendruck im Temperaturbereich von 300 bis 500°C durchgeführt. Das Methanol enthielt 1 bis 68 Vol.-% Wasserdampf. Die Raumgeschwindigkeit betrug 1 bis 10 Liter/h · Liter Katalysator. Die durch die Methanolspaltung entstandenen Gase wurden mit Hilfe einer Gasuhr gemessen und gaschromatographisch analysiert.

Das unzersetzte Methanol bzw. ein Gemisch von Methanol und Wasser wurde in einem Kühler kondensiert, gemessen und gaschromatographisch analysiert.

Die Erfindung ist durch die nachstehenden Beispiele erläutert:

## Beispiel 1

Ein kommerzielles $TiO_2$ (BET-Os = 45 m²/g) wurde mit einem kommerziellen $La_2O_3$ (BET-Os = 25 m²/g) (Gewichtsverhältnis 9:1) in einem Kollergang etwa 30 min. gemischt. Nach der Zugabe von 8 Gew.% Al-Stearat wurde die Masse zu 4,5 x 4,5 mm Tabletten verpreßt und die hergestellten Tabletten 8 Std. auf 640°C in Luft aufgeheizt, dann 1 Std. auf 640°C gehalten und anschließend wieder auf Umgebungstemperatur abgekühlt.

Nach einer Imprägnierung mit einer wäßrigen $H_2PtCl_6$-Lösung (bei 25°C) wurden die Pt-haltigen Tabletten getrocknet (120°C, 4h) und bei 400°C (2h) nachcalciniert.

Der so erhaltene Katalysator (K-1) enthielt 0,3 Gew.-% Pt; seine physikalisch-mechanischen Daten sind in Tabelle I zusammengestellt.

## Beispiel 2

Die Arbeitsweise von Beispiel 1 wurde mit der Abweichung wiederholt, daß statt des $La_2O_3$ die gleiche Menge $ZrO_2$ verwendet wurde. Die physikalisch-mechanischen Daten des so erhaltenen Katalysators (K-2) sind in Tabelle I zusammengestellt.

Die nach den Beispielen 1 und 2 erhaltenen Katalysatoren wurden zur Reduktion der Edelmetallkomponente über einen Zeitraum von 3 Stunden im Wasserstoffstrom auf 400°C aufgeheizt. Nach der Abkühlung auf 300°C wurde mit der Methanolspaltung in einem konventionellen Metallrohrreaktor begonnen. Das Methanol enthielt 2,2 Vol.-% $H_2O$. Die Methanolspaltung wurde mit einer Raumgeschwindigkeit von 2 Liter/Stunde und Liter Katalysator bei 300, 350 und 400°C durchgeführt.

Die Ergebnisse sind in Tabelle II zusammengefaßt.

Tabelle I

Physikalsich-Mechanische Daten der hergestellten Katalysatoren

| Kat. Nr. | Format | BET-Os $(m^2/g)$ | SG $(g/l)$ | SDF $(kg)$ | PV $(ml/g)$ | Zusammensetzung[+] (Gew.%) |
|---|---|---|---|---|---|---|
| K-1 | 4.5x4.5mm Tabl. | 35 | 1350 | 16.0 | 0.12 | $TiO_2$ (88), $La_2O_3$ (10) |
| K-2 | 4.5x4.5mm Tabl. | 37 | 1400 | 16.0 | 0.13 | $TiO_2$ (88), $ZrO_2$ (10) |

Anmerkungen

BET-OS - spez. Oberfläche nach BET

SG      - Schüttgewicht

SDF     - Seitendruckfestigkeit

PV      - Porenvolumen

+) alle hergestellten Katalysatoren enthalten 0,3 Gew.-% Pt

EP 0 201 070 B1

Tabelle II Methanolspaltung mit den hergestellten Katalysatoren

| Kat. Nr. | T °C | Gasmenge l/h (25°C) | Gaszusammensetzung (Vol %) | | | | Methanolumsatz (%) |
|---|---|---|---|---|---|---|---|
| | | | CO | H₂ | CO₂ | CH₄ | |
| K-1 | 300 | 74 | 26.1 | 68.8 | 3.7 | 1.4 | 40.8 |
| | 350 | 146 | 28.5 | 67.1 | 3.0 | 1.4 | 80.6 |
| | 400 | 180 | 28.8 | 66.5 | 3.0 | 1.7 | 99.3 |
| K-2 | 300 | 74 | 25.8 | 68.0 | 3.6 | 2.6 | 40.0 |
| | 350 | 146 | 28.3 | 66.5 | 3.1 | 2.1 | 79.5 |
| | 400 | 180 | 28.6 | 66.1 | 2.9 | 2.4 | 98.7 |

Einsatz: Methanol mit 2.2 Vol.-%, $H_2O$.

**Ansprüche**

1. Katalysator zur Herstellung von Synthesegas bzw. von Wasserstoff aus wasserhaltigem Methanol durch Spaltung bzw. Wasserdampfreformierung, enthaltend
    A) eine Edelmetallkomponente aus einem oder mehreren Elementen der 8. Nebengruppe des Periodensystems auf

B) einem oxidischen Träger auf der Basis

$B_1$) von $TiO_2$ und/oder $CeO_2$, gegebenenfalls im Gemisch mit anderen feuerfesten Metalloxiden und/oder einem hydraulischen Binder oder

$B_2$) von $TiO_2$ und/oder $CeO_2$, die als Zwischenschicht auf die Oberfläche eines vorgeformten feuerfesten Trägers aufgebracht sind,

dadurch gekennzeichnet, daß der oxidische Träger ($B_1$) bzw. die Zwischenschicht ($B_2$) als andere feuerfeste Metalloxide $ZrO_2$ und/oder $La_2O_3$ in Konzentrationen von 1 bis 10 Gew.-%, insbesondere von 5 bis 10 Gew.-%, enthält.

2. Katalysator nach Anspruch 1, dadurch gekennzeichnet, daß der oxidische Träger ($B_1$) bzw. der vorgeformte feuerfeste Träger ($B_2$) in Form von Tabletten, Kugeln, Ringen, Strangpreßlingen oder Waben vorliegt.

3. Katalysator nach Anspruch 1 oder 2, dadurch gekennzeichnet, daß die Edelmetallkomponente (A) Platin und/oder Rhodium und/oder Iridium und/oder Palladium, vorzugsweise Platin, darstellt.

4. Katalysator nach einem der Ansprüche 1 bis 3, dadurch gekennzeichnet, daß die Konzentrationen der Edelmetallkomponente (A) 0,01 bis 3 Gew.-%, insbesondere 0,05 bis 0,3 Gew.-%, bezogen auf den gesamten Katalysator, beträgt.

5. Katalysator nach einem der Ansprüche 1 bis 4, dadurch gekennzeichnet, daß der hydraulische Binder Portland- oder Calciumaluminatzement ist, wobei die Konzentration des Binders 5 bis 50 Gew.-%, vorzugsweise 15 bis 25 Gew.-%, bezogen auf den gesamten Katalysator, beträgt.

6. Katalysator nach einem der Ansprüche 1 bis 5, dadurch gekennzeichnet, daß (Variante $B_1$) das feuerfeste Metalloxid $\alpha$-$Al_2O_3$ oder $Cr_2O_3$ und (Variante $B_2$) der vorgeformte feuerfeste Träger Cordierit, Mullit, Siliciumcarbid oder $\alpha$-$Al_2O_3$ ist.

7. Verfahren zur Herstellung des Katalysators nach einem der Ansprüche 1 (Variante $B_1$) und 2 bis 5, dadurch gekennzeichnet, daß man aus $TiO_2$ und/oder $CeO_2$ im Gemisch mit $ZrO_2$ und/oder $La_2O_3$ durch Verpressen Formkörper herstellt, diese calciniert und mit der Edelmetallkomponente imprägniert.

8. Verfahren nach Anspruch 7, dadurch gekennzeichnet, daß man dem $TiO_2$ und/oder $CeO_2$ hydraulischen Binder zusetzt, nach Wasserzugabe durch Verpressen Formkörper herstellt, diese trocknet, calciniert und mit der Edelmetallkomponente imprägniert.

9. Verfahren nach Anspruch 7 oder 8, dadurch gekennzeichnet, daß man der zu verpressenden Masse Gleitmittel, wie Aluminiumstearat und/oder Graphit, zusetzt.

10. Verfahren zur Herstellung des Katalysators nach einem der Ansprüche 1 (Variante $B_2$) und 2 bis 5, dadurch gekennzeichnet, daß man $TiO_2$ und/oder $CeO_2$ und $ZrO$ und/oder $La_2O_3$ auf die Oberfläche eines vorgeformten feuerfesten Materials aufbringt, den so behandelten Formkörper calciniert und mit der Edelmetallkomponente imprägniert.

11. Verfahren nach Anspruch 10, dadurch gekennzeichnet, daß man das $TiO_2$ durch Imprägnierung der Formkörper mit Alkoxytitanaten, anschließender Hydrolyse und Calcinierung aufbringt.

12. Verfahren nach einem der Ansprüche 10 oder 11, dadurch gekennzeichnet, daß man das $TiO_2$ und/oder $CeO_2$ auf vorgeformte Kugeln, Tabletten, Ringe, Strangpreßlinge oder Wabenkörper aufbringt.

13. Verfahren nach einem der Ansprüche 7 bis 12, dadurch gekennzeichnet, daß man die Imprägnierung mit der Edelmetallkomponente unter Verwendung von wasserlöslichen Edelmetallsalzen, insbesondere von $H_2PtCl_6$ oder $(NH_4)_2PtCl_6$ oder den entsprechenden Pd- oder Rh-Salzen durchführt.

14. Verfahren nach einem der Ansprüche 7 bis 13, dadurch gekennzeichnet, daß man die Calcinierung des mit der Metallkomponente imprägnierten Trägermaterials bei 450 bis 650 °C, insbesondere bei 550 bis 600 °C durchführt.

**15.** Anwendung der Katalysatoren nach den Ansprüchen 1 bis 6 bzw. der nach den Ansprüchen 7 bis 14 hergestellten Katalysatoren zur Herstellung von Synthesegas bzw. von Wasserstoff aus wasserhaltigem Methanol, durch Spaltung bzw. Wasserdampfreformierung, in Abhängigkeit vom Wasserdampfgehalt des Methanols.

**16.** Anwendung nach Anspruch 15, dadurch gekennzeichnet, daß die Umsetzung des wasserhaltigen Methanols im Temperaturbereich von 300 bis 600°C unter einem Druck von 0,1 bis 10 bar bei einer Raumgeschwindigkeit von 0,5 bis 20 Liter wasserhaltiges Methanol je Stunde und Liter Katalysator durchgeführt wird.

**17.** Anwendung nach Anspruch 15 oder 16, dadurch gekennzeichnet, daß die Umsetzung im Temperaturbereich von 400 bis 500°C, beiDrucken von 0,1 bis 1 bar, insbesondere von 0,75 bis 1 bar, ausgehend von Methanol mit einem Wassergehalt von 0,5 bis 25 Vol.-%, insbesondere von 2 bis 10 Vol.-%, bei einer Raumgeschwindigkeit von 2 bis 8 Liter/h • Liter Katalysator (bezogen auf das wasserhaltige Methanol) durchgeführt wird.

**18.** Anwendung nach einem der Ansprüche 15 bis 17, dadurch gekennzeichnet, daß die Umsetzung des wasserhaltigen Methanols in Gegenwart von Sauerstoff unter autothermen Bedingungen durchgeführt wird.

## Claims

**1.** A catalyst for the production of synthesis gas or hydrogen from methanol containing water by splitting or steam reforming, containing

    A) a noble metal component comprising one or more elements of sub-group VIII of the periodic table on

    B) an oxide carrier based on

    $B_1$) $TiO_2$ and/or $CeO_2$, optionally mixed with other refractory metal oxides and/or a hydraulic binder or

    $B_2$) $TiO_2$ and/or $CeO_2$, which is applied as an intermediate layer on to the surface of a preformed refractory support,

characterised in that the oxide carrier ($B_1$) or the intermediate layer ($B_2$) contains, as other refractory metal oxides, $ZrO_2$ and/or $La_2O_3$ in concentrations of from 1 to 10 % by weight, in particular from 5 to 10 % by weight.

**2.** A catalyst according to Claim 1, characterised in that the oxide carrier ($B_1$) and/or the preformed refractory support ($B_2$) is present in the form of pellets, spheres, rings, extrusions or honeycombs.

**3.** A catalyst according to Claim 1 or 2, characterised in that the noble metal component (A) comprises platinum and/or rhodium and/or iridium and/or palladium, preferably platinum.

**4.** A catalyst according to any one of Claims 1 to 3, characterised in that the concentrations of the noble metal component (A) are 0.01 to 3% by weight, in particular 0.05 to 0.3 % by weight, in relation to the total catalyst.

**5.** A catalyst according to any one of Claims 1 to 4, characterised in that the hydraulic binder is Portland cement or calcium aluminate cement, the concentration of the binder being 5 to 50 % by weight, preferably 15 to 25 % by weight, in relation to the total catalyst.

**6.** A catalyst according to any one of Claims 1 to 5, characterised in that (variant $B_1$) the refractory metal oxide is alpha-$Al_2O_3$ or $Cr_2O_3$ and (variant $B_2$) the preformed refractory support is cordierite, mullite, silicon carbide or alpha-$Al_2O_3$.

**7.** A process for the preparation of the catalyst according to any of Claims 1 (variant $B_1$) and 2 to 5, characterised in that moulded bodies are produced by compressing $TiO_2$ and/or $CeO_2$ mixed with $ZrO_2$ and/or $La_2O_3$, and these moulded bodies are calcined and impregnated with the noble metal component.

EP 0 201 070 B1

8. A process according to Claim 7, characterised in that hydraulic binders are added to the $TiO_2$ and/or $CeO_2$ and, after the addition of water, moulded bodies are produced by compressing, and the bodies are calcined and impregnated with the noble metal component.

9. A process according to Claim 7 or 8, characterised in that mould lubricants, such as aluminium stearate and/or graphite, are added to the composition to be compressed.

10. A process for the preparation of the catalyst according to any of Claims 1 (variant $B_2$) and 2 to 5, characterised in that $TiO_2$ and/or $CeO_2$ and $ZrO_2$ and/or $La_2O_3$, are applied to the surface of a preformed refractory material, and the moulded bodies thus treated are calcined and impregnated with the noble metal component.

11. A process according to Claim 10, characterised in that the $TiO_2$ is applied by impregnating the moulded bodies with alkoxytitanates, by subsequent hydrolysis and calcination.

12. A process according to either of Claims 10 or 11, characterised in that the $TiO_2$ and/or $CeO_2$ is applied to preformed spheres, pellets, rings, extrusions or honeycombs.

13. A process according to any one of Claims 7 to 12, characterised in that the impregnation with the noble metal component is carried out using water-soluble noble metal salts, in particular $H_2PtCl_6$ or $(NH_4)_2PtCl_6$ or the corresponding Pd or Rh-salts.

14. A process according to any one of Claims 7 to 13, characterised in that the calcination of the support material impregnated with the metal component is carried out at 450 to 650° C, in particular at 550 to 600° C.

15. Use of the catalysts according to Claims 1 to 6 or the catalysts prepared according to Claims 7 to 14, for the production of synthesis gas or of hydrogen from methanol containing water, by splitting or steam reforming, depending on the water vapour content of the methanol.

16. Use according to Claim 15, characterised in that the conversion of the water-containing methanol is carried out within a temperature range of from 300 to 600° C, under a pressure of from 0.1 to 10 bar and at a spatial velocity of from 0.5 to 20 litres of water-containing methanol per hour and litre of catalyst.

17. Use according to Claim 15 or 16, characterised in that the conversion is carried out within a temperature range of from 400 to 500° C, at pressures of from 0.1 to 1 bar, in particular from 0.75 to 1 bar, starting from methanol with a water content of from 0.5 to 25 % by volume, in particular 2 to 10 % by volume, at a spatial velocity of from 2 to 8 litres/h . litre of catalyst (in relation to the water-containing methanol).

18. Use according to any one of Claims 15 to 17, characterised in that the conversion of the water-containing methanol is carried out in the presence of oxygen under autothermal conditions.

**Revendications**

1. Catalyseur pour la fabrication de gaz de synthèse ou d'hydrogène à partir de méthanol aqueux par dissociation ou reformage à la vapeur d'eau, contenant :
   (A) un composant de métal (métaux) noble(s), à base d'un ou plusieurs éléments du Sous-Groupe 8 de la Classification Périodique, sur
   (B) un support de type oxyde, à base
   ($B_1$) de $TiO_2$ et/ou $CeO_2$, le cas échéant en mélange avec d'autres oxydes métalliques réfractaires et/ou un liant hydraulique, ou
   ($B_2$) de $TiO_2$ et/ou $CeO_2$, qui sont appliqués, en tant que couche intermédiaire, sur la surface d'un support réfractaire préformé,
   caractérisé par le fait que le support de type oxyde ($B_1$) ou la couche intermédiaire ($B_2$) contient, comme autres oxydes métalliques réfractaires, $ZrO_2$ et/ou $La_2O_3$ en concentrations allant de 1 à 10% en poids, en particulier, de 5 à 10% en poids.

9

2. Catalyseur selon la revendication 1, caractérisé par le fait que le support à base d'oxyde ($B_1$) ou le support réfractaire préformé ($B_2$) se présente sous la forme de pastilles, de sphères, d'anneaux, d'extrudats ou de nids d'abeilles.

3. Catalyseur selon la revendication 1 ou 2, caractérisé par le fait que le composant de métal (métaux) noble(s) (A) est constitué par du platine et/ou du rhodium et/ou de l'iridium et/ou du palladium, de préférence, du platine.

4. Catalyseur selon l'une des revendications 1 à 3, caractérisé par le fait que la concentration du composant de métal (métaux) noble(s) (A) s'élève à 0,01 à 3% en poids, en particulier, à 0,05 à 0,3% en poids, par rapport à la totalité du catalyseur.

5. Catalyseur selon l'une des revendications 1 à 4, caractérisé par le fait que le liant hydraulique est du ciment Portland ou du ciment d'aluminate de calcium, la concentration du liant s'élevant à 5 à 50% en poids, de préférence, à 15 à 25% en poids, par rapport à la totalité du catalyseur.

6. Catalyseur selon l'une des revendications 1 à 5, caractérisé par le fait que (variante $B_1$) l'oxyde métallique réfractaire est $\alpha$-$Al_2O_3$ ou $Cr_2O_3$, et (variante $B_2$) le support réfractaire préformé est la cordiérite, la mullite, le carbure de silicium ou $\alpha$-$Al_2O_3$.

7. Procédé de fabrication du catalyseur selon l'une des revendications 1 (variante $B_1$) et 2 à 5, caractérisé par le fait qu'on prépare des corps moulés par compression à partir de $TiO_2$ et/ou $CeO_2$, en mélange avec $ZrO_2$ et/ou $La_2O_3$, qu'on les calcine et qu'on les· imprègne du composant de métal (métaux) noble(s).

8. Procédé selon la revendication 7, caractérisé par le fait qu'on ajoute un liant hydraulique au $TiO_2$ et/ou $CeO_2$, qu'on fabrique des corps moulés par compression après addition d'eau, qu'on sèche et calcine ces derniers, et qu'on les imprègne par le composant de métal (métaux) noble(s).

9. Procédé selon l'une des revendications 7 ou 8, caractérisé par le fait qu'on ajoute à la masse à comprimer, un lubrifiant comme le stéarate d'aluminium et/ou le graphite.

10. Procédé de fabrication du catalyseur tel que défini à l'une des revendications 1 (variante $B_2$) et 2 à 5, caractérisé par le fait qu'on applique $TiO_2$ et/ou $CeO_2$ et Zro et/ou $La_2O_3$ sur la surface d'une matière réfractaire préformée, qu'on calcine les corps moulés ainsi traités et qu'on les imprègne du composant de métal (métaux) noble(s).

11. Procédé selon la revendication 10, caractérisé par le fait qu'on applique le $TiO_2$ par imprégnation des corps moulés par des alcoxytitanates, hydrolyse subséquente et calcination.

12. Procédé selon l'une des revendications 10 ou 11, caractérisé par le fait qu'on applique le $TiO_2$ et/ou le $CeO_2$ sur des sphères, pastilles, anneaux, extrudats ou corps en nids d'abeilles préformés.

13. Procédé selon l'une des revendications 7 à 12, caractérisé par le fait qu'on conduit l'imprégnation par le composant de métal (métaux) noble(s) avec utilisation de sels solubles dans l'eau de métaux nobles, en particulier, de $H_2PtCl_6$ ou $(NH_4)_2PtCl_6$ ou leurs sels de Pd ou Rh correspondants.

14. Procédé selon l'une des revendications 7 à 13, caractérisé par le fait qu'on conduit la calcination de la matière de support imprégnée par le composant de métal (métaux) noble(s), à une température de 450 à 650° C, en particulier, de 550 à 600° C.

15. Utilisation des catalyseurs tels que définis à l'une des revendications 1 à 6 ou des catalyseurs préparés par le procédé tel que défini à l'une des revendications 7 à 14 pour la fabrication de gaz de synthèse ou d'hydrogène à partir de méthanol aqueux, par dissociation ou reformage à la vapeur d'eau, en fonction de la teneur en vapeur d'eau du méthanol.

16. Utilisation selon la revendication 15, caractérisée par le fait que la conversion du méthanol aqueux est conduite dans une plage de température de 300 à 600° C, sous une pression de 0,1 à 10 bars, à une vitesse spatiale de 0,5 à 20 litres de méthanol aqueux par heure et par litre de catalyseur.

17. Utilisation selon l'une des revendications 15 ou 16, caractérisée par le fait que la conversion est conduite dans une plage de température allant de 400 à 500°C, sous des pressions de 0,1 à 1 bar, en particulier de 0,75 à 1 bar, en partant du méthanol ayant une teneur en eau de 0,5 à 25% en volume, en particulier de 2 à 10% en volume, à une vitesse spatiale de 2 à 8 litres/h. litre de catalyseur (par rapport au méthanol aqueux).

18. Utilisation selon l'une des revendications 15 à 17, caractérisée par le fait que la conversion du méthanol aqueux est conduite en présence d'oxygène dans des conditions autothermiques.